# EUROPÄISCHE PATENTSCHRIFT

(11) **EP 0 620 068 B1**
(45) Veröffentlichungstag und Bekanntmachung des Hinweises auf die Patenterteilung: **08.01.1997**
(21) Anmeldenummer: 93106187.3
(22) Anmeldetag: 16.04.1993
(51) Int. Cl.: B23B 31/12

(54) **Bohrfutter**
Drilling chuck
Mandrin de perçage

(43) Veröffentlichungstag der Anmeldung: 19.10.1994
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- EP-A- 0 302 992
- EP-A- 0 413 046
- EP-A- 0 468 157
- WO-A-91/12914
- DE-A- 4 106 129

## Beschreibung

Die Erfindung betrifft ein Bohrfutter mit einem an eine Bohrspindel anschließbaren Futterkörper, mit zwischen sich eine Aufnahme für das Bohrwerkzeug bildenden Spannbacken, die zum öffnen und schließen des Bohrfutters durch einen am Futterkörper drehbar und axial unverschiebbar geführten Spannring verstellbar sind, ferner mit einem Sperring zum Verriegeln des Spannrings, wozu der Sperring axial verschiebbar am Futterkörper geführt und durch die Kraft einer Sperrfeder in der gegen den Spannring vorgeschobenen Verriegelungsstellung gehalten ist, ferner mit einem koaxial am Bohrfutter angeordneten, axial unverschiebbaren und in Umfangsrichtung drehbaren Haltering und mit einer zwischen dem Haltering und dem Sperring wirksamen Stelleinrichtung, durch die beim Verdrehen des Halterings relativ zum Sperring letzterer zwischen seiner Verriegelungsstellung und einer den Spannring zum Verdrehen freigebenden Entriegelungsstellung verschiebbar ist, wozu die Stelleinrichtung von einer Stellkurve am einen Teil, entweder Sperring oder Haltering, und einem sich bei der gegenseitigen Verdrehung beider Teile an der Stellkurve entlang bewegenden Stellglied am anderen Teil gebildet ist.

Bei einem aus WO 91/12 914 bekannten Bohrfutter dieser Art ist der Haltering frei verdrehbar auf dem Spannring gelagert und die zwischen dem Haltering und dem undrehbar am Futterkörper gehaltenen Sperring wirksame Stelleinrichtung von einer Steuerausnehmung in der Wand des Sperrings und einem axial in die Steuerausnehmung eingreifenden Steuernocken des Halterings gebildet, wobei der Sperring in der Verriegelungsstellung steht, wenn sich der Steuernocken in der Steuerausnehmung befindet. Um den Spannring verdrehen zu können, muß der Sperring in die Entriegelungsstellung verschoben und der Haltering verdreht werden, damit der Sperring sich mit einer an die Steuerausnehmung in Umfangsrichtung anschließenden Gleitfläche axial am Steuernocken abstützen kann und dadurch in der Entriegelungsstellung festgehalten wird. Das erneute Einrücken des Sperrings in die Verriegelungsstellung erfolgt dann beim Bohren selbsttätig, indem der Steuernocken unter den Erschütterungen des Schlagbohrbetriebs an der Gleitfläche ab- und zurück in die Steuerausnehmung hineingleitet. Die Bedienung des Bohrfutters erfordert daher die getrennte Betätigung des Spannrings, des Halterings und des Sperrings. Die Handhabung des Bohrfutters ist daher kompliziert und umständlich und erfordert Kenntnis und Übung. Außerdem müssen alle drei Ringe zur Betätigung gut zugänglich sein und leicht ergriffen werden können, was bedeutet, sie nebeneinander im gut handhabungsfähigem Abstand voneinander am Bohrfutter anzuordnen. Das kann von Nachteil für die axiale Baulänge des Bohrfutters sein.

Der Erfindung liegt die Aufgabe zugrunde, ein Bohrfutter der eingangs genannten Art so auszubilden, daß die Betätigung von Spannring, Haltering und Sperring und somit die Handhabung des Bohrfutters insgesamt wesentlich vereinfacht wird und Fehlbedienungen ausgeschlossen werden.

Diese Aufgabe wird nach der Erfindung in Verbindung mit den eingangs genannten Merkmalen dadurch gelöst, daß der Haltering am Futterkörper gelagert und sein Drehweg gegenüber dem Futterkörper in beiden Drehrichtungen durch Anschläge begrenzt ist, daß die Sperrfeder eine den Sperring zumindest in der Verriegelungsstellung fixierende Rasteinrichtung bildet, die zwischen dem Sperring und dem Haltering wirksam und in Verbindung mit der Stelleinrichtung so ausgebildet ist, daß das Stellglied unter der Kraft der Sperrfeder an der Stellkurve anliegt und die Stellkurve für das Stellglied einen ersten Rastsitz bildet, der dem Sperring die Einnahme der Verriegelungsstellung ermöglicht, sowie an diesen ersten Rastsitz in beiden Drehrichtungen anschließende schräge Stellkurvenrampen aufweist, an denen sich das Stellglied um den Axialhub verschiebt, der zum Verschieben des Sperrings aus der Verriegelungsstellung in die Entriegelungsstellung erforderlich ist.

Durch die Erfindung wird erreicht, daß zur richtigen Einstellung des Sperrings allein das Verdrehen des Halterings genügt. Dabei erteilt der Haltering über die Stelleinrichtung dem Sperring automatisch diejenigen Bewegungen, die er axial zwischen der Verriegelungsstellung und der Entriegelungsstellung und, im Falle eines Bohrfutters mit durch eine Nachstellfeder oder durch selbsttätige Nachspannung bewirkter Nachstellung der Spannbacken, auch in Umfangrichtung ausführen muß, um in die jeweils richtigen Einstellungen zu gelangen. Ein weiterer großer Vorteil besteht darin, daß beim Schließen des Bohrfutters über die in der entsprechenden Drehrichtung an den Rastsitz anschließende Stellkurvenrampe der Sperring in der Entriegelungsstellung gehalten wird, solange der Spannring und der Haltering zum Einspannen des Bohrwerkzeugs drehend von Hand gegeneinander verspannt werden. Die Einspannung des Bohrwerkzeugs kann daher mit aller Kraft erfolgen, die von Hand zwischen dem Spannring und dem Haltering überhaupt ausgeübt werden kann. Erst wenn beide Ringe losgelassen werden, kann der Sperring unter der Kraft der Sperrfeder durch Ablauf des Stellglieds an der Stellkurvenrampe selbsttätig in die Verriegelungsstellung zurückkehren. Im Ergebnis wird die Bedienung des Bohrfutters ganz wesentlich erleichtert, weil es von Hand der Betätigung nur noch des Spannrings und des Halterings bedarf. Eine direkte Betätigung des Sperrings von Hand ist nicht mehr erforderlich. Daher empfiehlt sich besonders eine Ausführungsform des erfindungsgemäßen Bohrfutters, die eine Handhabung unmittelbar am Sperring erst gar nicht mehr ermöglicht und daher dadurch gekennzeichnet ist, daß der Haltering axial neben dem Sperring am Futterkörper angeordnet und mit einer Hülse versehen ist, die den Sperring an seiner äußeren Umfangsfläche so übergreift und abdeckt, daß der Sperring zum direkten Betätigen von Hand unzugänglich ist. Da weiter der Futterkörper durch den Haltering über die dessen Drehweg gegenüber dem Futterkörper begrenzenden Anschläge gegen Verdrehen festgehalten werden kann, braucht auch der Futterkörper zur Bedienung des Bohrfutters nicht mehr direktem Zugriff durch die Hand zugänglich zu sein, so daß in weiter bevorzugter Ausführungsform der Haltering und der Spannring zusammen den Futterkörper nach außen im wesentlichen über dessen ganze axiale Länge überdecken.

Weiter empfiehlt es sich, daß die Rasteinrichtung den Sperring auch in der Entriegelungsstellung fixiert und dazu die Stellkurvenrampe, die in der dem Schließen des Bohrfutters entsprechenden Drehrichtung des Spannringes auf den ersten Rastsitz folgt, in einem zweiten Rastsitz für das Stellglied endet, in dem das Stellglied den Sperring in der Entriegelungsstellung hält.

In einer sehr vorteilhaften Ausführungsform kann dann die Stelleinrichtung als Zwangsführung des Sperrings und des Halterings aneinander ausgebildet und die Rasteinrichtung zwischen dem Sperring und dem Futterkörper wirksam sein. Vorzugsweise ist in der von der Stelleinrichtung gebildeten Zwangsführung des Sperrings und des Halterings aneinander die Drehrichtung des Halterings zum Verstellen des Sperrings in die Verriegelungsstellung der Drehrichtung des Spannrings zum Schließen des Bohrfutters entgegengesetzt. Werden dann der Spannring und der Haltering zum Schließen des Bohrfutters gegeneinander verdreht, erfolgt am Ende der Verdrehung ohne weiteres Zutun die Verstellung des Sperrings in die Verriegelungsstellung und umgekehrt beim Öffnen des Bohrfutters die Verstellung des Sperrings in die Entriegelungsstellung zu Beginn der Verdrehung. Im einfachsten Fall kann die Zwangsführung dadurch verwirklicht werden, daß die Stellkurve der Stelleinrichtung von den Seitenwänden einer Stellnut gebildet ist, zwischen die das Stellglied axial formschlüssig eingreift.

Vorzugsweise fixiert die Rasteinrichtung den Sperring auch in der Entriegelungsstellung; dazu endet die andere Stellkurvenrampe, die in der dem Schließen des Bohrfutters entsprechenden Drehrichtung des Spannrings auf den ersten Rastsitz folgt, in einem zweiten Rastsitz für das Stellglied, in dem das Stellglied den Sperring in der Entriegelungsstellung hält. Der Spannring kann dann unbehindert durch den Sperring beliebig verdreht werden, beispielsweise wenn Bohrwerkzeuge verschiedenen Schaftdurchmessers gegeneinander auszutauschen sind. Im übrigen empfiehlt es sich, dem ersten Rastsitz axial gegenüber eine Anschlagkurve für das Stellglied vorzusehen, die eine direkte axiale Verschiebung des Sperrings aus der Verriegelungsstellung in die Entriegelungsstellung verhindert, was sonst bei starken axialen Futterschwingungen und Schlagbeanspruchungen, wie sie beim Hammerbohren auftreten können, u. U. leicht der Fall sein kann. Im einzelnen kann die Stellkurve durch den Rand einer in der äußeren Umfangsfläche des Sperrings ausgebildeten Tasche gebildet sein, in die das am Haltering sitzende Stellglied greift, wobei der Haltering die Tasche überdeckt und nach außen hin verschließt. Dabei kann am Taschenrand auch mindestens einer oder können beide der den Drehweg des Halterings begrenzenden Anschläge ausgebildet sein.

Die schon erwähnten Möglichkeiten für die Ausbildung der den Drehweg des Halterings begrenzenden Anschläge besitzen einen Nachteil, daß nämlich der Anschlag des Halterings zunächst am Sperring erfolgt und die Drehwegbegrenzung somit nur wirksam wird, wenn der Sperring seinerseits gegenüber dem Futterkörper nicht oder in der jeweiligen Drehrichtung nicht weiter verdrehbar ist. Durch diesen Anschlag wird somit der Sperring in Drehrichtung beansprucht, was dessen Axialverschieblichkeit erschweren kann. Ist außerdem der Sperring seinerseits begrenzt verdrehbar, wie es bei Bohrfuttern mit durch eine Nachstellfeder oder durch selbsttätige Nachspannung bewirkter Nachstellung der Spannbacken zum Zwecke einer Nachstellbegrenzung häufig oder fast regelmäßig der Fall ist, so muß auch der Sperring zunächst in seine jeweilige Endstellung verdreht werden, ehe die Drehwegbegrenzung für den Haltering wirksam werden kann. Um diese Nachteile zu vermeiden, empfiehlt es sich, den Haltering zur Drehwegbegrenzung unmittelbar am Futterkörper zum Anschlag kommen zu lassen. Eine dafür besonders bevorzugte Ausführungsform ist dadurch gekennzeichnet, daß zur Ausbildung der den Drehweg des Halterings gegenüber dem Futterkörper begrenzenden Anschläge eines dieser Teile, Futterkörper oder Haltering, mindestens eine achsenparallele Planfläche aufweist, der am anderen Teil zwei achsenparallele und zueinander schräge Anschlagflächen gegenüberstehen, die durch ihre gegenseitige Schrägstellung den Winkel bestimmen, um den der Haltering gegenüber dem Futterkörper maximal verdrehbar ist.

Ist aus den schon erwähnten Gründen auch der Sperring am Futterkörper drehbar gelagert und in seinem Drehweg zwischen zwei weiteren Anschlägen begrenzt, wobei der Drehweg des Sperrings den maximal möglichen Drehweg des Spannrings für ein selbsttätiges Nachstellen des Bohrfutters während dem Bohren bestimmt, so ist im Rahmen der Erfindung darauf zu achten, daß gegenüber dem Drehweg des Sperrings der Drehweg des Halterings in beiden Drehrichtungen noch um einen Stellweg größer ist, der beim Weiterdrehen des Halterings gegenüber dem Sperring zu dessen Verschieben zwischen der Verriegelungsstellung und der Entriegelungsstellung erforderlich ist. Dabei kann bei Bohrfuttern ohne selbsttätige Nachspannung für die Nachstellung zwischen dem Sperring und dem Futterkörper eine Nachstellfeder angeordnet sein, die den Sperring gegenüber dem Futterkörper in der dem Schließen des Bohrfutters entsprechenden Drehrichtung des Spannrings beaufschlagt. Zur Ausbildung der die Drehwege des Sperrings und des Halterings gegenüber dem Futterkörper begrenzenden Anschläge empfiehlt es sich, am Futterkörper mindestens eine achsenparallele Planfläche vorzusehen, der am Sperring und am Haltering je zwei achsenparallele und zueinander schräge Anschlagflächen gegenüberstehen, die durch ihre gegenseitige Schrägstellung den Winkel bestimmen, um den der Sperring und der Haltering jeweils gegenüber dem Futterkörper maximal verdrehbar sind.

Im folgenden wird die Erfindung an verschiedenen, in der Zeichnung dargestellten Ausführungsbeispielen näher erläutert; es zeigen:
- Fig. 1: ein Bohrfutter nach der Erfindung, teils in Seitenansicht, teils in einem Axialschnitt,
- Fig. 2a: den Schnitt A - A durch das Bohrfutter nach Fig. 1, und zwar bei offenem Spannfutter,
- Fig. 2b: den Schnitt B - B durch das Bohrfutter nach Fig. 1 in dem der Fig. 2a entsprechenden Futterzustand, in einer Abwicklung in Umfangsrichtung des Bohrfutters,
- Fig. 3a: den Schnitt A - A bei in der Bohrstellung befindlichem Bohrfutter,
- Fig. 3b: den Schnitt B - B, ebenfalls bei in der Bohrstellung befindlichem Bohrfutter,
- Fig. 4a: den Schnitt A - A bei gespanntem Bohrfutter und
- Fig. 4b: den Schnitt B - B ebenfalls bei gespanntem Futter entsprechend Fig. 4a.

Das in der Zeichnung dargestellte selbst- bzw. nachspannende Bohrfutter 1 ist zum Betrieb an einer Schlagbohrspindel bestimmt, die in der Zeichnung selbst nicht dargestellt ist. Das Bohrfutter 1 besitzt drei Futterbacken 2, die geneigt zur Futterachse 3 in Führungsbohrungen 4 eines Spannrings 5 geführt sind. Der Futterkörper 6 trägt ein Stellgewinde 7 zum Verstellen der Futterbacken 2. Der Spannring 5 und der Futterkörper 6 sind gegenseitig verdrehbar aneinander geführt und axial kraftschlüssig gegeneinander abgestützt, wozu Wälzkugeln 8 dienen, die einerseits an einem Außenbund 9 des Futterkörpers, andererseits an einer fest mit dem Spannring 5 verbundenen Ringscheibe 10 ablaufen. Im einzelnen besitzt der Futterkörper 6 eine Kegelfläche 11, die parallel zur Führungsrichtung der Spannbacken 2 verläuft und auf der sich das Stellgewinde 7 befindet, das an jeder Spannbacke 2 mit einer Querverzahnung 12 im Eingriff steht. Werden im Ergebnis der Spannring 5 und der Futterkörper 6 gegeneinander verdreht, werden je nach Drehsinn die Spannbacken 2 durch das Stellgewinde 7 im Sinne eines Schließens oder Öffnens der zwischen den Spannbacken 2 gebildeten Aufnahme für das nicht dargestellte Bohrwerkzeug verstellt.

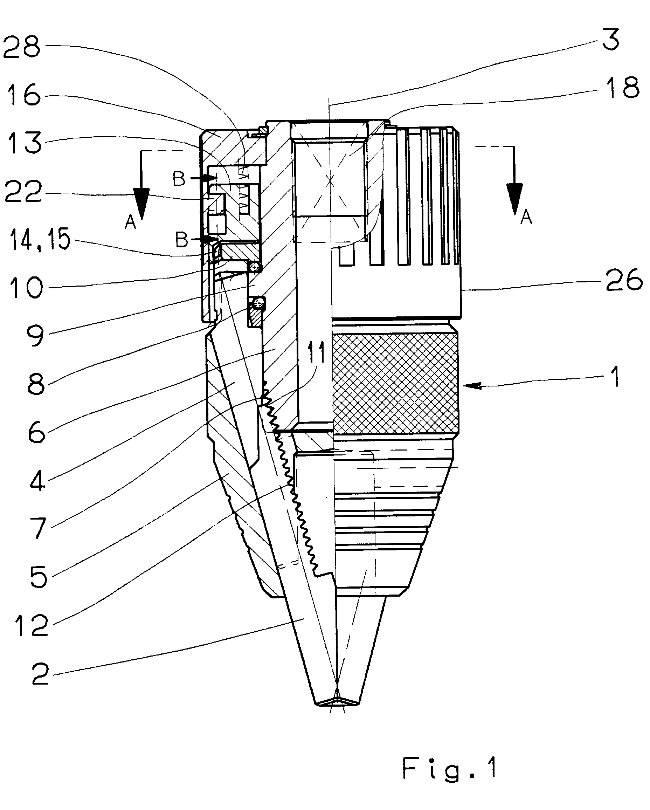

Zum Verriegeln des Spannrings 5 dient ein am Futterkörper 6 axial verschiebbar geführter Sperring 13, der eine Verzahnung 14 aufweist, die in gegen den Spannring 5 vorgeschobener, in Fig. 1 gezeigter Axiallage in eine an der Ringscheibe 10 ausgebildete Gegenverzahnung 15 des Spannrings 5 greift und in vom Spannring 5 zurückgezogener Lage des Sperrings 13 an der Gegenverzahnung 15 außer Eingriff steht, so daß der Spannring 5 unbehindert durch den Sperring 13 verdreht werden kann. Zu dieser Axialverstellung des Sperrings dient ein am Futterkörper 6 drehbar und axial unverschiebbar geführter Haltering 16. Zwischen diesem Haltering 16 und dem Sperring 13 ist eine im folgenden noch näher zu beschreibende Stelleinrichtung vorgesehen, die beim Verdrehen des Halterings 16 den Sperring 13 zwischen seinen beiden Axialstellungen, in welchen er den Spannring 5 verriegelt oder freigibt, verschiebt.

Zur Nachspannungsbegrenzung ist der Sperring 13 am Futterkörper 6 zwischen zwei Grenzstellungen verdrehbar, die in Umfangsrichtung des Futterkörpers 6 um den Nachspannweg auseinander liegen, der im Rahmen der Nachspannungsbegrenzung maximal zugelassen ist. Im einzelnen besitzt dazu der Futterkörper 6 zwei sich drehsymmetrisch gegenüber liegende achsenparallele und sich über den Verschiebungsbereich des Sperrings 13 erstreckende Planflächen 18. Diesen Planflächen stehen am Sperring 13 je zwei achsenparallele und zueinander schräge Anschlagflächen 19 gegenüber, die in der auf der Planfläche 18 des Futterkörpers 6 senkrechten Axialebene bei 20 ineinander übergehen und durch ihre gegenseitige Schrägstellung den Winkel bestimmen, um den der Sperring 13 zum Nachspannen gegenüber dem Futterkörper 6 maximal verdrehbar ist.

Die Drehrichtung des Halterings 16 zum Verschieben des Sperrings 13 in dessen den Spannring 5 verriegelnde Axiallage ist entgegengesetzt zur Drehrichtung des Spannrings 5 beim Schließen des Bohrfutters 1. Wird also der Haltering 16 so verdreht, daß der Sperring 13 den Spannring 5 freigibt, ist gleichzeitig sicher gestellt, daß sich der Sperring 13 hinsichtlich seiner Verdrehbarkeit in derjenigen Grenzstellung befindet, die eine Nachspannung ermöglicht und aus der sich der Sperring 13 beim Nachspannvorgang bis in die andere Grenzstellung bewegen kann, in der seine weitere Drehbewegung und damit der Nachspannvorgang insgesamt ein Ende findet.

Die Stelleinrichtung zwischen dem Haltering 16 und dem Sperring 13 ist von Stellkurven 21 und von den Stellkurven gesteuerten Stellgliedern 22 gebildet, wobei sich die Stellkurven 21 am Sperring 13 und die Stellglieder 22 am Haltering 16 befinden. Die Stellkurve 21 ist durch den Rand einer in der äußeren Umfangsfläche des Sperrings 13 ausgebildeten Tasche 100 gebildet, in die das am Haltering 16 sitzende Stellglied 22 greift. Der Haltering 16 übergreift mit seiner Hülse 26 die Taschen 100 und schließt sie nach außen hin ab.

Weiter sind Sperrfedern 28 vorgesehen, die dazu dienen, den Sperring 13 in der Verriegelungsstellung zu halten. Dabei bildet die Sperrfeder 28 jeweils Rasteinrichtungen, die den Sperring 13 in seinen beiden Axialstellungen, in welchen er den Spannring 5 verriegelt oder freigibt, fixieren, so daß selbsttätige Verstellungen des Sperrings 13 während des Bohrbetriebs ausgeschlossen sind. Die Rasteinrichtung ist zwischen dem Sperring 13 und dem Haltering 16 wirksam und in Verbindung mit der Stelleinrichtung ausgebildet. Der Sperring 13 ist dabei in axialer Richtung durch die Sperrfeder 28 beaufschlagt, so daß das Stellglied 22 unter der Kraft der Sperrfeder 28 an der Stellkurve 21 anliegt. Die Stellkurve 21 bildet für das Stellglied 22 einen ersten Rastsitz 21.1, in dem das Stellglied 22 es dem Sperring 13 ermöglicht, die Verriegelungsstellung einzunehmen. An diesen ersten Rastsitz 21.1 schließen sich in beiden Drehrichtungen schräge Stellkurvenrampen 21.2, 21.3 an, an denen sich das Stellglied 22 beim Verdrehen des Halteringes 16 um den Axialhub verschiebt, der zum Verschieben des Sperrings 13 zwischen der Verriegelungsstellung und der Entriegelungsstellung erforderlich ist. Die Stellkurvenrampe 21.3, die in der dem Schließen des Bohrfutters entsprechenden Drehrichtung des Spannrings 5 auf den ersten Rastsitz 22.1 folgt, endet in einem zweiten Rastsitz 21.4 für das Stellglied 22, in dem das Stellglied 22 den Sperring 13 in der Entriegelungsstellung hält. Dem ersten Rastsitz 21.1 ist axial gegenüber liegend eine Anschlagkurve 21.5 für das Stellglied 22 vorgesehen, die eine direkte axiale Verschiebung des Sperrings 13 aus der Verriegelungsstellung in die Entriegelungsstellung verhindert, solange nicht gleichzeitig eine entsprechende Drehung des Halterings 16 erfolgt.

Die Verdrehung des Halterings 16 ist gegenüber dem Futterkörper 6 in beiden Drehrichtungen durch Anschläge begrenzt. Im Ausführungsbeispiel kann einer der Anschläge durch das Randstück 52 der Tasche 100 gebildet sein. Jedoch wird in diesem Fall die Drehbegrenzung erst wirksam, wenn in der jeweiligen Drehrichtung auch der Sperring 13 mit einer seiner zueinander schrägen Anschlagflächen 19 an den ihnen zugeordneten Planflächen 18 des Futterkörpers 6 anliegt. Diese Abhängigkeit von der Sperringstellung kann auf einfache Weise dadurch vermieden werden, daß der Haltering 16 vergleichbar wie der Sperring 13 unmittelbar am Futterkörper 6 zum Anschlag kommt. Dazu ist der Haltering 16 seinerseits mit zueinander schrägen und zur Futterachse parallelen Anschlagflächen 53 ausgestattet, die den Planflächen 18 am Futterkörper 6 gegenüber stehen. Auch hier bestimmen die beiden Anschlagflächen 53 durch ihre gegenseitige Schrägstellung den Winkel, um den der Haltering 16 gegenüber dem Futterkörper 6 maximal verdrehbar ist. Jedoch ist der eingeschlossene Winkel zwischen den Anschlagflächen 53 des Halterings 16 kleiner als der Winkel zwischen den Anschlagflächen 19 des Sperrings 13. Daher ist der Drehweg des Halterings 16 gegenüber dem des Sperrings 13 in beiden Drehrichtungen größer, und zwar um jeweils mindestens den Stellweg, der beim Weiterdrehen des Halterings 16 gegenüber dem schon festgehaltenen Sperring 13 noch erforderlich ist, um den Sperring 13 zwischen der Verriegelungs- und der Entriegelungsstellung zu verschieben, also das Stellglied 22 an den Stellkurvenrampen 21.2 und 21.3 entlang zwischen den in den Fig. 20b und 22b dargestellten Lagen zu bewegen.

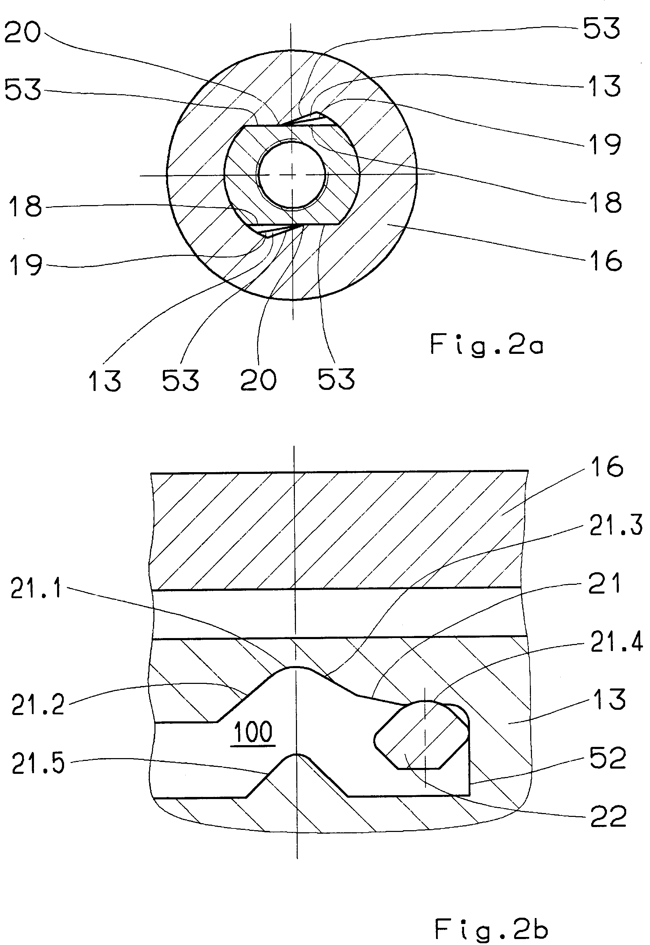

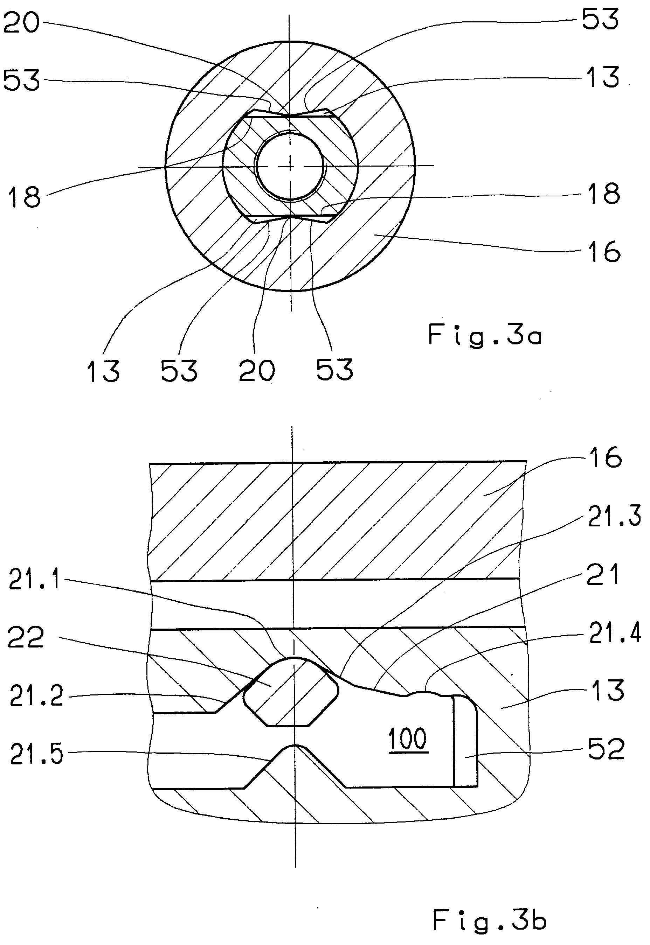

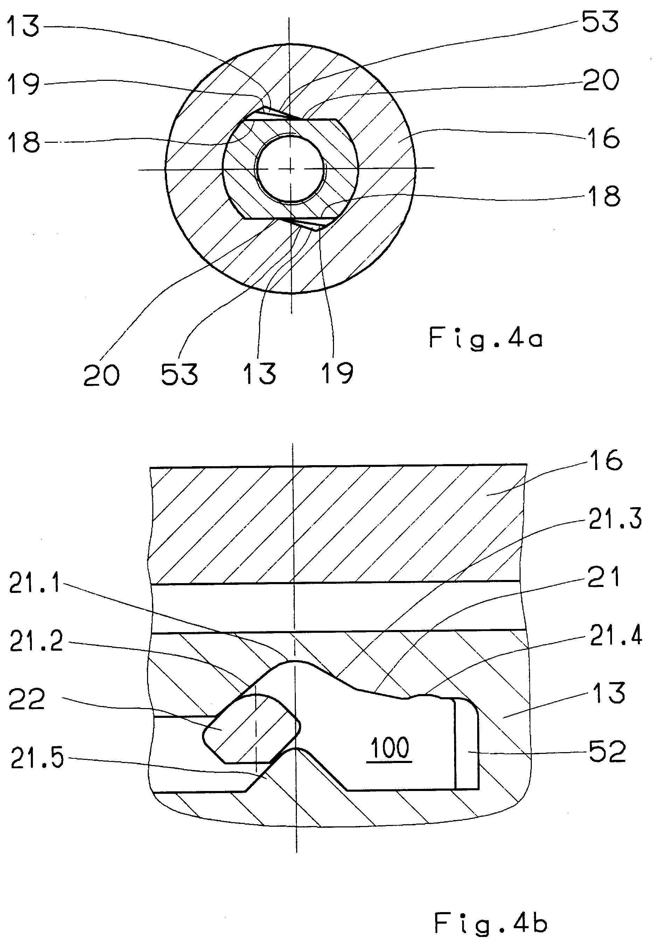

Die Funktionsweise des erfindungsgemäßen Bohrfutters sei anhand der Fig. 2a, b bis 4a, b kurz erläutert: Die Fig. 2a, b zeigen das Bohrfutter im offenen Zustand. Zum Schließen wird das Bohrfutter am Haltering 16 von Hand gehalten und der Spannring im Schließsinn verdreht. Dabei wird spätestens, wenn sich die Spannbacken 2 an den Werkzeugschaft angelegt haben, der Futterkörper 6 im gleichen Drehsinn mitgenommen, bis er mit den Planflächen 18 an den Anschlagflächen 19 des Sperrings zur Anlage kommt. Von da an wird auch der Sperring 13 mitgedreht, der sich somit in Fig. 2b gegenüber dem Haltering 16 und dem Stellglied 22 nach rechts bewegt, wodurch das Stellglied 22 in den Rastsitz 21.1 gelangt und der Spannring 5 verriegelt wird, wie es die Fig. 3a, b zeigen. Um dennoch das Bohrfutter noch fester spannen zu können, kann der Spannring 5 mitsamt dem Sperring 13 noch weiter in Fig. 3b nach rechts verdreht werden, bis nämlich die Planflächen 18 des Futterkörpers an den Anschlagflächen 53 des Halterings 16 zur Anlage kommen und der in den Fig. 4a, b gezeigte Zustand erreicht ist. Hier ist der Futterkörper 6 gegen weiteres Mitdrehen am Haltering 16 festgehalten. Gleichzeitig ist aber über die Stellkurvenrampe 21.2 auch der Sperring 13 wieder aus dem Verriegelungseingriff herausgehoben, so daß der Spannring 5 gegenüber dem Futterkörper 6 mit aller von Hand aufbringbaren Kraft nachgezogen werden kann. Wird dann der Haltering 16 losgelassen, drückt die Sperrfeder 28 den Sperring 13 in die Verriegelungsstellung gemäß Fig. 3b zurück, wobei gleichzeitig das an der Stellkurvenrampe 21.2 abgleitende Stellglied 22 den Haltering 16 in die Stellung gemäß Fig. 3a zurückdreht.

Man erkennt, daß es zur Bedienung des Bohrfutters nur der Handhabung des Halterings 16 und des Spannrings 5 bedarf. Der Zugriff zum Sperring 13 oder Futterkörper 6 ist nicht erforderlich. Daher ist das Bohrfutter so gestaltet, daß der Sperring 13 und der Futterkörper 6 dem Zugriff von Hand überhaupt nicht zugänglich sind. Der Haltering 16 ist axial neben dem Sperring 13 am Futterkörper angeordnet, wobei seine Hülse 26 den Sperring 13 an seiner äußeren Umfangsfläche so übergreift und abdeckt, daß der Sperring 13 zum direkten Betätigen von Hand nicht zugänglich ist. Außerdem überdecken der Haltering 16 und der Spannring 5 zusammen den Futterkörper 6 nach außen im wesentlichen über dessen gesamte axiale Länge.

## Patentansprüche

1. Bohrfutter mit einem an eine Bohrspindel anschließbaren Futterkörper (6), mit zwischen sich eine Aufnahme für das Bohrwerkzeug bildenden Spannbacken (2), die zum Öffnen und Schließen des Bohrfutters durch einen am Futterkörper (6) drehbar und axial unverschiebbar geführten Spannring (5) verstellbar sind, ferner mit einem Sperring (13) zum Verriegeln des Spannrings (5), wozu der Sperring (13) axial verschiebbar am Futterkörper (6) geführt und durch die Kraft einer Sperrfeder (28) in der gegen den Spannring (5) vorgeschobenen Verriegelungsstellung gehalten ist, ferner mit einem koaxial am Bohrfutter (1) angeordneten, axial unverschiebbaren und in Umfangsrichtung drehbaren Haltering (16) und mit einer zwischen dem Haltering (16) und dem Sperring (13) wirksamen Stelleinrichtung, durch die beim Verdrehen des Halterings (16) relativ zum Sperring (13) letzterer zwischen seiner Verriegelungsstellung und einer den Spannring (5) zum Verdrehen freigebenden Entriegelungsstellung verschiebbar ist, wozu die Stelleinrichtung von einer Stellkurve (21) am einen Teil (13, 16), entweder Sperring oder Haltering, und einem sich bei der gegenseitigen Verdrehung beider Teile an der Stellkurve (21) entlang bewegenden Stellglied (22) am anderen Teil gebildet ist, dadurch gekennzeichnet, daß der Haltering (16) am Futterkörper (6) gelagert und sein Drehweg gegenüber dem Futterkörper (6) durch Anschläge (52, 53) begrenzt ist, daß die Sperrfeder (28) eine den Sperring (13) zumindest in der Verriegelungsstellung fixierende Rasteinrichtung bildet, die zwischen dem Sperring (13) und dem Haltering (16) wirksam und in Verbindung mit der Stelleinrichtung so ausgebildet ist, daß das Stellglied (22) unter der Kraft der Sperrfeder (28) an der Stellkurve (21) anliegt und die Stellkurve (21) für das Stellglied (22) einen ersten Rastsitz (21.1) bildet, der dem Sperring (13) die Einnahme der Verriegelungsstellung ermöglicht, sowie an diesen ersten Rastsitz (21.1) in beiden Drehrichtungen anschließende schräge Stellkurvenrampen (21.2, 21.3) aufweist, an denen sich das Stellglied (22) um den Axialhub verschiebt, der zum Verschieben des Sperrings (13) aus der Verriegelungsstellung in die Entriegelungsstellung erforderlich ist.

2. Bohrfutter nach Anspruch 1, dadurch gekennzeichnet, daß der Haltering (16) axial neben dem Sperring (13) am Futterkörper (6) angeordnet und mit einer Hülse (26) versehen ist, die den Sperring (13) an seiner äußeren Umfangsfläche so übergreift und abdeckt, daß der Sperring (13) zum direkten Betätigen von Hand unzugänglich ist.

3. Bohrfutter nach Anspruch 2, dadurch gekennzeichnet, daß der Haltering (16) und der Spannring (5) zusammen den Futterkörper (6) nach außen im wesentlichen über dessen gesamte axiale Länge überdecken.

4. Bohrfutter nach einem der Ansprüche 1 bis 3, dadurch gekennzeichnet, daß die Rasteinrichtung den Sperring (13) auch in der Entriegelungsstellung fixiert und dazu die Stellkurvenrampe (21.3), die in der dem Schließen des Bohrfutters entsprechenden Drehrichtung des Spannringes (5) auf den ersten Rastsitz (21.1) folgt, in einem zweiten Rastsitz (21.4) für das Stellglied (22) endet, in dem das Stellglied (22) den Sperring (13) in der Entriegelungsstellung hält.

5. Bohrfutter nach einem der Ansprüche 1 bis 4, dadurch gekennzeichnet, daß die Stelleinrichtung als Zwangsführung des Sperrings (13) und des Halterings (16) aneinander ausgebildet und die Rasteinrichtung zwischen dem Sperring (13) und dem Futterkörper (6) wirksam ist.

6. Bohrfutter nach Anspruch 5, dadurch gekennzeichnet, daß in der von der Stelleinrichtung gebildeten Zwangsführung des Sperrings (13) und des Halterings (16) aneinander die Drehrichtung des Halterings (16) zum Verstellen des Sperrings (13) in die Verriegelungsstellung der Drehrichtung des Spannrings (5) zum Schließen des Bohrfutters (1) entgegengesetzt ist.

7. Bohrfutter nach Anpruch 5 oder 6, dadurch gekennzeichnet, daß die Stellkurve (21) der Stelleinrichtung von den Seitenwänden einer Stellnut gebildet ist, zwischen die das Stellglied (22) axial formschlüssig eingreift.

8. Bohrfutter nach einem der Ansprüche 1 bis 7, dadurch gekennzeichnet, daß dem ersten Rastsitz (21.1) axial gegenüber eine Anschlagkurve (21.5) für das Stellglied (22) vorgesehen ist, die eine direkte axiale Verschiebung des Sperrings (13) aus der Verriegelungsstellung in die Entriegelungsstellung verhindert.

9. Bohrfutter nach einem der Ansprüche 1 bis 8, dadurch gekennzeichnet, daß die Stellkurve (21, 21.5) durch den Rand einer in der äußeren Umfangsfläche des Sperrings (13) ausgebildeten Tasche (100) gebildet ist, in die das am Haltering (16) sitzende Stellglied (22) greift, wobei der Haltering (16) die Tasche (100) überdeckt und nach außen hin verschließt.

10. Bohrfutter nach Anspruch 9, dadurch gekennzeichnet, daß am Taschenrand (52) auch mindestens einer der den Drehweg des Halterings (16) begrenzenden Anschläge ausgebildet ist.

11. Bohrfutter nach einem der Ansprüche 1 bis 10, dadurch gekennzeichnet, daß zur Ausbildung der den Drehweg des Halterings (16) gegenüber dem Futterkörper (6) begrenzenden Anschläge eines der Teile, Futterkörper oder Haltering, mindestens eine achsenparallele Planfläche (18) aufweist, der am anderen Teil zwei achsenparallele und zueinander schräge Anschlagflächen (53) gegenüberstehen, die durch ihre gegenseitige Schrägstellung den Winkel bestimmen, um den der Haltering (16) gegenüber dem Futterkörper (6) maximal verdrehbar ist.

12. Bohrfutter nach einem der Ansprüche 1 bis 11, dadurch gekennzeichnet, daß der Sperring (13) am Futterkörper (6) drehbar gelagert und in seinem Drehweg zwischen zwei weiteren Anschlägen (19) begrenzt ist, wobei der Drehweg des Sperrings (13) den maximal möglichen Drehweg des Spannrings (5) für ein selbsttätiges Nachstellen des Bohrfutters während dem Bohren bestimmt und demgegenüber der Drehweg des Halterings (16) in beiden Drehrichtungen noch um einen Stellweg größer ist, der beim Weiterdrehen des Halterings (16) gegenüber dem Sperring (13) zu dessen Verschieben zwischen der Verriegelungsstellung und der Entriegelungsstellung erforderlich ist.

13. Bohrfutter nach Anspruch 12, dadurch gekennzeichnet, daß zwischen dem Sperring (13) und dem Futterkörper (6) eine Nachstellfeder angeordnet ist, die den Sperring (13) gegenüber dem Futterkörper (6) in der dem Schließen des Bohrfutters entsprechenden Drehrichtung des Spannrings (5) beaufschlagt.

14. Bohrfutter nach Anspruch 12 oder 13, dadurch gekennzeichnet, daß zur Ausbildung der die Drehwege des Sperrings (13) und des Halterings (16) gegenüber dem Futterkörper (6) begrenzenden Anschläge am Futterkörper (6) mindestens eine achsenparallele Planfläche (18) vorgesehen ist, der am Sperring (13) und am Haltering (16) je zwei achsenparallele und zueinander schräge Anschlagflächen (19, 53) gegenüberstehen, die durch ihre gegenseitige Schrägstellung den Winkel bestimmen, um den der Sperring (13) und der Haltering (16) jeweils gegenüber dem Futterkörper (6) maximal verdrehbar sind.

## Claims

1. A drilling chuck comprising a chuck body (6) which can be connected to a drilling spindle, clamping jaws (2) which form between them a receiving means for the drilling tool and which for opening and closing of the drilling chuck are displaceable by a clamping ring (5) guided rotatably and axially immovably on the chuck body (6), further comprising a locking ring (13) for locking the clamping ring (5), for which purpose the locking ring (13) is axially displaceably guided on the chuck body (6) and is held by the force of a locking spring (28) in the locking position of being pushed forward towards the clamping ring (5), further comprising a holding ring (16) which is arranged coaxially on the drilling chuck (1) and which is axially immovable and rotatable in the peripheral direction, and a setting means which is operative between the holding ring (16) and the locking ring (13) and by which, upon rotation of the holding ring (16) relative to the locking ring (13), the latter is displaceable between its locking position and an unlocking position of releasing the clamping ring (5) for the rotary movement, for which purpose the setting means is formed by a setting cam (21) on the one member (13, 16), either the locking ring or the holding ring, and a setting member (22) on the other member, which setting member is movable along the setting cam (21) upon mutual rotary movement of the two members, characterised in that the holding ring (16) is mounted on the chuck body (6) and its rotary travel relative to the chuck body (6) is limited by abutments (52, 53), that the locking spring forms a retaining means which fixes the locking ring (13) at least in the locking position and which is operative between the locking ring (13) and the holding ring (16) and which in conjunction with the setting means is of such a configuration that the setting member (22) bears against the setting cam (21) under the force of the locking spring (28) and the setting cam (21) forms for the setting member (22) a first retaining seat (21.1) which permits the locking ring (13) to adopt the locking position, and has inclined setting cam ramps (21.2, 21.3) which adjoin said first retaining seat (21.1) in both directions of rotation and at which the setting member (22) is displaced by the axial stroke movement required for displacement of the locking ring (13) out of the locking position into the unlocking position.

2. A drilling chuck according to claim 1 characterised in that the holding ring (16) is arranged on the chuck body (6) axially beside the locking ring (13) and is provided with a sleeve (26) which engages over and covers the locking ring (13) at its outer peripheral surface in such a way that the locking ring (13) is inaccessible for direct actuation by hand.

3. A drilling chuck according to claim 2 characterised in that the holding ring (16) and the clamping ring (5) together cover over the chuck body (6) in an outward direction substantially over the entire axial length thereof.

4. A drilling chuck according to one of claims 1 to 3 characterised in that the retaining means also fixes the locking ring (13) in the unlocking position and for that purpose the setting cam ramp (21.3) which follows the first retaining seat (21.1) in the direction of rotation of the clamping ring (5) corresponding to closure of the drilling chuck terminates in a second retaining seat (21.4) for the setting member (22), in which the setting member (22) holds the locking rag (13) in the unlocking position.

5. A drilling chuck according to one of claims 1 to 4 characterised in that the setting means is in the form of positive guidance of the locking ring (13) and the holding ring (16) against each other and the retaining means is operative between the locking ring (13) and the chuck body (6).

6. A drilling chuck according to claim 5 characterised in that in the positive guidance of the locking ring (13) and the holding ring (16) against each other, which is formed by the setting means, the direction of rotation of the holding ring (16) for setting the locking ring (13) in the locking position is opposite to the direction of rotation of the clamping ring (5) for closure of the drilling chuck (1).

7. A drilling chuck according to claim 5 or claim 6 characterised in that the setting cam (21) of the setting means is formed by the side walls of a setting groove, between which the setting member (22) axially positively lockingly engages.

8. A drilling chuck according to one of claims 1 to 7 characterised in that disposed axially opposite the first retaining seat (21.1) is an abutment cam (21.5) for the setting member (22), which prevents direct axial displacement of the locking ring (13) out of the locking position into the unlocking position.

9. A drilling chuck according to one of claims 1 to 8 characterised in that the setting cam (21, 21.5) is formed by the edge of a pocket (100) which is provided in the outer peripheral surface of the locking ring (13) and into which the setting member (22) carried on the holding ring (16) engages, the holding ring (16) covering over the pocket (100) and closing it in an outward direction.

10. A drilling chuck according to claim 9 characterised in that at least one of the abutments limiting the rotary travel of the holding ring (16) is also provided on the pocket edge (52).

11. A drilling chuck according to one of claims 1 to 10 characterised in that to provide the abutments for limiting the rotary travel of the holding ring (16) relative to the chuck body (6), one of the members, the chuck body or the holding ring, has at least one flat surface (18) which is parallel to the axis and opposite which are disposed on the other member two abutment surfaces (53) which are parallel to the axis and which are inclined relative to each other and which by virtue of their mutual inclined positioning determine the angle through which the holding ring (16) is rotatable at a maximum relative to the chuck body (6).

12. A drilling chuck according to one of claims 1 to 11 characterised in that the locking ring (13) is rotatably mounted on the chuck body (6) and is limited in its rotary travel between two further abutments (19), wherein the rotary travel of the locking ring (13) determines the maximum possible rotary travel of the clamping ring (5) for automatic take-up adjustment of the drilling chuck during the drilling operation and in comparison therewith the rotary travel of the holding ring (16) in both directions of rotation is even larger by a setting travel which is required upon further rotary movement of the holding ring (16) relative to the locking ring (13) for displacement thereof between the locking position and the unlocking position.

13. A drilling chuck according to claim 12 characterised in that arranged between the locking ring (13) and the chuck body (6) is a takeup adjustment spring which urges the locking ring (13) relative to the chuck body (6) in the direction of rotation of the clamping ring (5), which corresponds to closure of the drilling chuck.

14. A drilling chuck according to claim 12 or claim 13 characterised in that at least one flat surface (18) which is parallel to the axis is provided to form the abutments on the chuck body (6), which limit the rotary travels of the locking ring (13) and the holding rag (16) relative to the chuck body (6), opposite which flat surface are disposed on each of the locking ring (13) and the holding ring (16) two abutment surfaces (19, 53) which are parallel to the axis and which are inclined relative to each other and which by virtue of their mutual inclined positioning determine the angle through which the locking ring (13) and the holding ring (16) are respectively rotatable at a maximum relative to the chuck body (6).

## Revendications

1. Mandrin de perçage comportant un corps de mandrin (6) pouvant être relié à une broche de perçage avec entre eux un logement pour des mâchoires de serrage (2) formant l'outil de perçage, lesquelles sont réglables pour l'ouverture et la fermeture du mandrin de perçage par un anneau de serrage (5) rotatif sur le corps de mandrin (6) et guidées de manière non mobile axialement, comportant en outre un anneau de blocage (13) pour le verrouillage de l'anneau de serrage (5), l'anneau de blocage (13) étant à cet effet guidé de manière axialement mobile sur le corps de mandrin (6) et maintenu par la force d'un ressort d'arrêt (28) dans la position de verrouillage avancée vers l'anneau de serrage (5), comportant en outre un anneau de maintien disposé coaxialement sur le mandrin de perçage (1), non mobile axialement et rotatif dans le sens périphérique et comportant un dispositif de réglage efficace entre l'anneau de maintien (16) et l'anneau de blocage (13), grâce auquel, lors de la mise en rotation de l'anneau de maintien (16) par rapport à l'anneau de blocage (13), ce dernier est mobile entre sa position de blocage et une position de déverrouillage libérant l'anneau de serrage (5) pour la mise en rotation, le dispositif de réglage (12) étant formé à cet effet d'une came de réglage (21) sur une partie (13, 16), soit l'anneau de blocage soit l'anneau de maintien, et d'un élément de réglage (22) se déplaçant le long de la came de réglage (21) lors de la rotation mutuelle des deux parties sur l'autre partie, caractérisé en ce que l'anneau de maintien (16) est positionné sur le corps de mandrin (6) et que sa course de rotation par rapport au corps de mandrin (6) est limité par des butées (52, 53), en ce que le ressort d'arrêt (28) forme un dispositif à crans fixant l'anneau de blocage (13) au moins dans la position de verrouillage, lequel dispositif à crans est formé entre l'anneau de blocage (13) et l'anneau de maintien (16) de manière efficace et en liaison avec le dispositif de réglage de telle sorte que l'élément de réglage (22) vient s'appliquer par la force du ressort d'arrêt (28) contre la came de réglage (21) et que la came de réglage (21) forme pour l'élément de réglage (22) un premier siège à crans (21.1) qui permet à l'anneau de blocage (13) de prendre la position de verrouillage, et présente sur ce premier siège à crans (21.1), des rampes de cames de réglage (21.2, 21.3) obliques reliées dans les deux sens de rotation, sur lesquelles l'élément de réglage (22) se déplace de la course axiale qui est nécessaire pour le déplacement de l'anneau de blocage (13) de la position de verrouillage vers la position de déverrouillage.

2. Mandrin de perçage selon la revendication 1, caractérisé en ce que l'anneau de maintien (16) est disposé de manière axialement adjacente à l'anneau de blocage (13) sur le corps de mandrin (6) et doté d'une douille (26) qui chevauche et recouvre l'anneau de serrage (13) sur sa surface périphérique extérieure de sorte que l'anneau de blocage (13) est inaccessible pour l'actionnement direct manuel.

3. Mandrin de perçage selon la revendication 2, caractérisé en ce que l'anneau de maintien (16) et l'anneau de serrage (5) recouvrent ensemble le corps de mandrin (6) vers l'extérieur sur l'ensemble de sa longueur axiale.

4. Mandrin de perçage selon l'une des revendications 1 à 3, caractérisé en ce que le dispositif à crans fixe l'anneau de blocage (13) dans la position de déverrouillage également, et qu'à cet effet, la rampe de cames de réglage (21.3), qui succède au premier siège à crans (21.1) dans le sens de rotation de l'anneau de serrage (5) correspondant à la fermeture du mandrin de perçage, finit dans un deuxième siège à crans (21.4) pour l'élément de réglage (22), dans lequel l'élément de réglage (22) maintient l'anneau de blocage (13) dans la position de déverrouillage.

5. Mandrin de perçage selon l'une des revendications 1 à 4, caractérisé en ce que le dispositif de réglage est conçu comme un guidage forcé l'un contre l'autre de l'anneau de blocage (13) et de l'anneau de maintien (16) et que le dispositif à crans est efficace entre l'anneau de blocage (13) et le corps de mandrin (6).

6. Mandrin de perçage selon la revendication 5, caractérisé en ce que dans le guidage forcé de l'anneau de blocage (13) et de l'anneau de maintien (16) l'un contre l'autre formé par le dispositif de réglage, le sens de rotation de l'anneau de maintien (16) pour le réglage de l'anneau de blocage (13) est opposé dans la position de verrouillage au sens de rotation de l'anneau de serrage (5) pour la fermeture du mandrin de perçage (1).

7. Mandrin de perçage selon la revendication 5 ou 6, caractérisé en ce que la came de réglage (21) du dispositif de réglage est formée par les parois latérales d'une rainure de réglage, entre lesquelles engrène l'élément de réglage (22) axialement et d'une manière mécanique.

8. Mandrin de perçage selon l'une des revendications 1 à 7, caractérisé en ce qu'il est prévu axialement par rapport au premier siège à crans (21.1) une came de butée (21.5) pour l'élément de réglage (22), qui empêche un déplacement axial direct de l'anneau de blocage (13) de la position de verrouillage vers la position de déverrouillage.

9. Mandrin de perçage selon l'une des revendications 1 à 8, caractérisé en ce que la came de réglage (21, 21.5) est formée par la bordure d'une poche (100) réalisée dans la surface périphérique extérieure de l'anneau de blocage (13), dans laquelle engrène l'élément de réglage (22) se trouvant sur l'anneau de maintien (16), l'anneau de maintien (16) recouvrant et fermant vers l'extérieur la poche (100).

10. Mandrin de perçage selon la revendication 9, caractérisé en ce qu'en bordure de la poche (52) est réalisée également au moins l'une des butées limitant la course de rotation de l'anneau de maintien (16).

11. Mandrin de perçage selon l'une des revendications 1 à 10, caractérisé en ce que pour la formation des butées limitant la course de rotation de l'anneau de maintien (16) par rapport au corps de mandrin (6) une des pièces, corps de mandrin ou anneau de maintien, présente au moins une surface plane (18) paraxiale, à laquelle sont opposées sur l'autre pièce deux surfaces d'arrêt (53) paraxiales et obliques l'une par rapport à l'autre, qui déterminent par leur position oblique l'une par rapport à l'autre l'angle selon lequel l'anneau de maintien (16) peut être mis en rotation maximum par rapport au corps de mandrin (6).

12. Mandrin de perçage selon l'une des revendications 1 à 11, caractérisé en ce que l'anneau de blocage (13) est positionné de manière rotative sur le corps de mandrin (6) et est limité dans sa course de rotation entre deux autres butées (19), le trajet de rotation de l'anneau de blocage (13) déterminant le trajet de rotation maximum possible de l'anneau de serrage (5) pour un réglage automatique du mandrin de perçage pendant le perçage et par rapport auquel, dans les deux sens de rotation, le trajet de rotation de l'anneau de maintien (16) est encore supérieur d'un trajet de réglage, qui est nécessaire lorsque l'on continue à mettre en rotation l'anneau de maintien (16) par rapport à l'anneau de blocage (13) pour son déplacement entre la position de verrouillage et la position de déverrouillage.

13. Mandrin de perçage selon la revendication 12, caractérisé en ce que, entre l'anneau de serrage (13) et le corps de mandrin (6) est disposé un ressort de réglage, qui pousse le ressort de blocage (13), par rapport au corps de mandrin (6), dans le sens de rotation de l'anneau de serrage (5) correspondant à la fermeture du mandrin de perçage.

14. Mandrin de perçage selon la revendication 12 ou 13, caractérisé en ce que, pour la formation des butées limitant les courses de rotation de l'anneau de blocage (13) et de l'anneau de maintien (16), par rapport au corps de mandrin (6) il est prévu au moins une surface plane paraxiale (18) sur le corps de mandrin (6), surface à laquelle sont opposées, sur l'anneau de blocage (13) et sur l'anneau de maintien (16) chaque fois deux surfaces de butée (19, 53) paraxiales et obliques l'une par rapport à l'autre, qui déterminent par leur position oblique mutuelle l'angle selon lequel l'anneau de blocage (13) et l'anneau de maintien (16) peuvent chaque fois être mis en rotation maximum par rapport au corps de mandrin (6).
